# EUROPEAN PATENT APPLICATION

(11) **EP 3 929 057 A1**
(43) Date of publication of application: **29.12.2021**
(21) Application number: 21167908.9
(22) Date of filing: 12.04.2021
(51) Int. Cl.: B61D 19/02, B61L 15/00, E05F 15/73

(54) **VEHICLE WITH PASSENGER DETECTION UNITS**

(30) Priority: 23.06.2020 JP 2020108275
(71) Applicant: TOYOTA JIDOSHA KABUSHIKI KAISHA, TOYOTA-SHI, AICHI-KEN 471-8571 (JP)
(72) Inventor: HARA, Yasuhiro, TOYOTA-SHI, AICHI-KEN, 471-8571 (JP); WATANABE, Jumpei, TOYOTA-SHI, AICHI-KEN, 471-8571 (JP)
(74) Representative: Cabinet Beau de Loménie

(57) **Abstract**

A vehicle (10) includes: a vehicle body (12) including an entrance and exit opening (E) that allows communication between inside and outside of a vehicle cabin; an incoming passenger detection unit (32) mounted on a first side in a width direction of the entrance and exit opening (E) outside the vehicle cabin of the vehicle body (12); and an outgoing passenger detection unit (28) mounted on a second side in the width direction of the entrance and exit opening (E) inside the vehicle cabin of the vehicle body (12).

## Description

### BACKGROUND OF THE INVENTION

### 1. Field of the Invention

The invention relates to vehicles.

### 2. Description of Related Art

U.S. Unexamined Patent Application Publication No. 2018/095473 discloses an electric vehicle capable of autonomously driving using a plurality of sensors. The electric vehicle has double doors on its side.

### SUMMARY OF THE INVENTION

As in the vehicle described in U.S. Unexamined Patent Application Publication No. 2018/095473, a wide entrance and exit can be secured by providing double doors on the side of a vehicle. However, since a passenger getting on the vehicle and a passenger getting off the vehicle use the same entrance and exit, there is room for improvement in terms of getting on and off the vehicle smoothly.

The invention provides a vehicle that allows passengers to smoothly get on and off the vehicle in a configuration in which a passenger getting on the vehicle and a passenger getting off the vehicle use the same entrance and exit.

A vehicle according to one aspect of the invention includes: a vehicle body including an entrance and exit opening that allows communication between inside and outside of a vehicle cabin; an incoming passenger detection unit mounted on a first side in a width direction of the entrance and exit opening outside the vehicle cabin of the vehicle body; and an outgoing passenger detection unit mounted on a second side in the width direction of the entrance and exit opening inside the vehicle cabin of the vehicle body.

According to the above aspect, the incoming passenger detection unit for a passenger getting on the vehicle is mounted outside the vehicle cabin of the vehicle body. The incoming passenger detection unit is mounted on the first side in the width direction of the entrance and exit opening. The passenger therefore gets on the vehicle from the first side in the width direction of the entrance and exit opening, and a flow line for the passenger getting on the vehicle is thus naturally formed.

The outgoing passenger detection unit for a passenger getting off the vehicle is mounted inside the vehicle cabin of the vehicle body. The outgoing passenger detection unit is mounted on the second side in the width direction of the entrance and exit opening. The passenger therefore gets off the vehicle from the second side in the width direction of the entrance and exit opening, and a flow line for the passenger getting off the vehicle is thus naturally formed so as not to obstruct the passenger getting on the vehicle.

In the above aspect, the entrance and exit opening may be configured to be opened and closed by an open and close door, the open and close door including a plurality of doors mounted adjacent to each other in the width direction of the entrance and exit opening.

According to the above configuration, the entrance and exit opening can be opened wide by opening the doors of the open and close door.

In the above aspect, the vehicle may have the entrance and exit opening in a middle part of a side of the vehicle body in a longitudinal direction of the vehicle. The open and close door may include a front door and a rear door, the front door being configured to open a front part of the entrance and exit opening by moving toward a front of the vehicle, and the rear door being configured to open a rear part of the entrance and exit opening by moving toward a rear of the vehicle.

According to the above configuration, the entrance and exit opening can be more quickly opened and closed than in a configuration in which the front door and the rear door move in the same direction. The vehicle has the entrance and exit opening in the middle part of the side of the vehicle body in the longitudinal direction of the vehicle. Accordingly, even when the entrance and exit opening is made sufficiently wide, it will not affect arrangement of units etc. of a drive system in front and rear parts of the vehicle body.

In the above aspect, the front door and the rear door may be configured to slide outside an outer panel of the vehicle body, and the incoming passenger detection unit may be mounted on an outer surface of the front door or an outer surface of the rear door.

According to the above configuration, the incoming passenger detection unit is mounted on the outer surface of the front door or the outer surface of the rear door. The incoming passenger detection unit does not hide even when the front door and the rear door are open, and a passenger can be detected by the incoming passenger detection unit.

In the above aspect, the incoming passenger detection unit may include an authentication unit configured to authenticate a passenger getting on the vehicle body.

According to the above configuration, the authentication unit authenticates a passenger when he or she gets on the vehicle body. As used herein, the term "authentication" is not limited to biometric authentication in which the passenger's face, body, etc. is recognized, but also includes electronic authentication etc. using a mobile terminal etc. The term "authentication" also includes authentication using an infrared motion sensor etc.

In the above aspect, the outgoing passenger detection unit may include a payment device configured to process a fare payment made by a passenger getting off the vehicle body.

According to the above configuration, a flow line for the passenger getting off the vehicle body is secured while allowing him or her to pay for a fare using the payment device as he or she gets off the vehicle body.

In the above aspect, an incoming passenger guidance display unit may be mounted outside the vehicle cabin of the vehicle body, the incoming passenger guidance display unit being configured to guide a passenger who is outside the vehicle cabin and is going to get on the vehicle body to the first side in the width direction of the entrance and exit opening. An outgoing passenger guidance display unit may be mounted inside the vehicle cabin of the vehicle body, the outgoing passenger guidance display unit being configured to guide a passenger who is inside the vehicle cabin and is going to get off the vehicle body to the second side in the width direction of the entrance and exit opening.

According to the above configuration, the incoming passenger guidance display unit can guide the passenger who is going to get on the vehicle to the position of the incoming passenger detection unit, namely an entrance position. Moreover, the outgoing passenger guidance display unit can guide the passenger who is going to get off the vehicle to the position of the outgoing passenger detection unit, namely an exit position.

In the above aspect, the vehicle may be configured to automatically stop at predetermined stop positions to pick up and drop off a passenger and to autonomously travel between the stop positions.

According to the above configuration, flow lines for the passenger getting on and the passenger getting off the vehicle are naturally formed, and the passengers can thus smoothly get on and off the vehicle.

In the above configuration, the incoming passenger guidance display unit may include a projection device configured to project a predetermined image toward a lower side of the vehicle.

In the above aspect, the incoming passenger detection unit may be mounted on an outer panel of the vehicle body.

As described above, in the configuration in which a passenger getting on the vehicle and a passenger getting off the vehicle use the same entrance and exit, the vehicle according to the invention allows the passengers to smoothly get on and off the vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic horizontal cross section of a vehicle according to a first embodiment;
FIG. 2 is a schematic side view of the vehicle according to the first embodiment;
FIG. 3 is a schematic horizontal cross section of a vehicle according to a second embodiment;
FIG. 4 is a schematic side view of a vehicle according to a third embodiment; and
FIG. 5 is a schematic horizontal cross section of a vehicle according to a fourth embodiment.

### DETAILED DESCRIPTION OF EMBODIMENTS

### First Embodiment

A vehicle 10 according to a first embodiment will be described with reference to the drawings. Arrows FR, UP, and RH shown in the figures indicate the direction toward the front of the vehicle 10, the direction toward the upper side of the vehicle 10, and the direction toward the right side in the width direction of the vehicle 10, respectively. When description is given using merely the terms "front," "rear," "upper," "lower," "right," and "left," these terms indicate the front and rear sides in the longitudinal direction of the vehicle, the upper and lower sides in the vertical direction of the vehicle, and the right and left sides in the width direction of the vehicle unless otherwise specified.

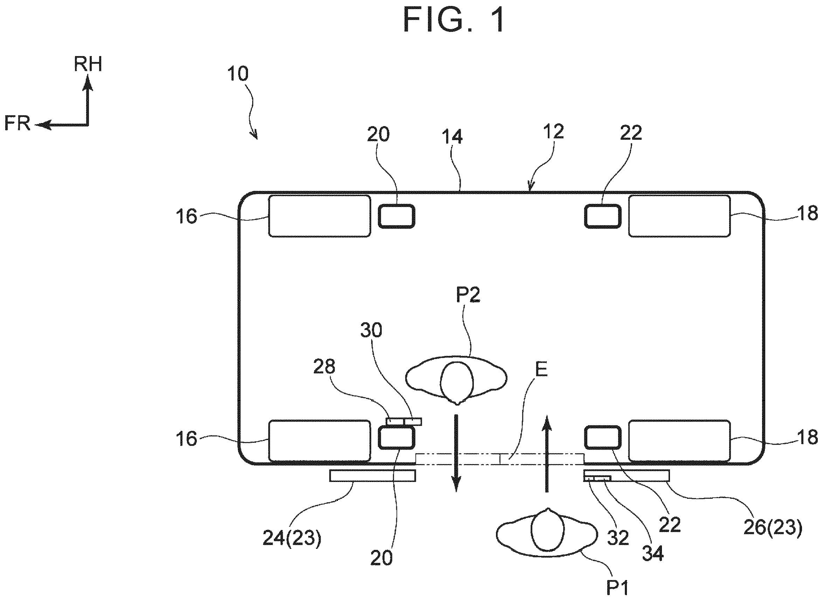

As shown in FIG. 1, the vehicle 10 of the present embodiment includes a vehicle body 12 capable of accommodating a large number of passengers. The vehicle body 12 includes an outer panel 14. A pair of right and left front wheels 16 is mounted on the front part of the vehicle 10, and a pair of right and left rear wheels 18 is mounted on the rear part of the vehicle 10. A battery, not shown, is mounted under the floor of the vehicle body 12. At least one of the front wheels 16 and the rear wheels 18 is driven by electricity supplied from the battery. That is, the vehicle 10 of the present embodiment is, e.g., an electric vehicle that runs on electricity.

The vehicle 10 of the present embodiment includes a driving control unit, not shown, and is autonomously driven by the driving control unit. The vehicle 10 is controlled to automatically stop at a predetermined stop position to pick up and drop off passengers.

The vehicle 10 has an entrance and exit opening E in the left side of the vehicle body 12. The entrance and exit opening E is located in the middle part of the vehicle body 12 in the longitudinal direction of the vehicle 10. A pair of right and left front center pillars 20 that forms a frame of the vehicle 10 extends in the vertical direction of the vehicle 10. The left front center pillar 20 is provided forward of the entrance and exit opening E in the longitudinal direction of the vehicle 10. A payment device 28, which is an outgoing passenger detection unit, and an open and close switch unit 30 are mounted on the left front center pillar 20. The payment device 28 and the open and close switch unit 30 will be described in detail later.

A pair of right and left rear center pillars 22 that forms the frame of the vehicle 10 extends in the vertical direction of the vehicle 10. The left rear center pillar 22 is provided rearward of the entrance and exit opening E in the longitudinal direction of the vehicle 10.

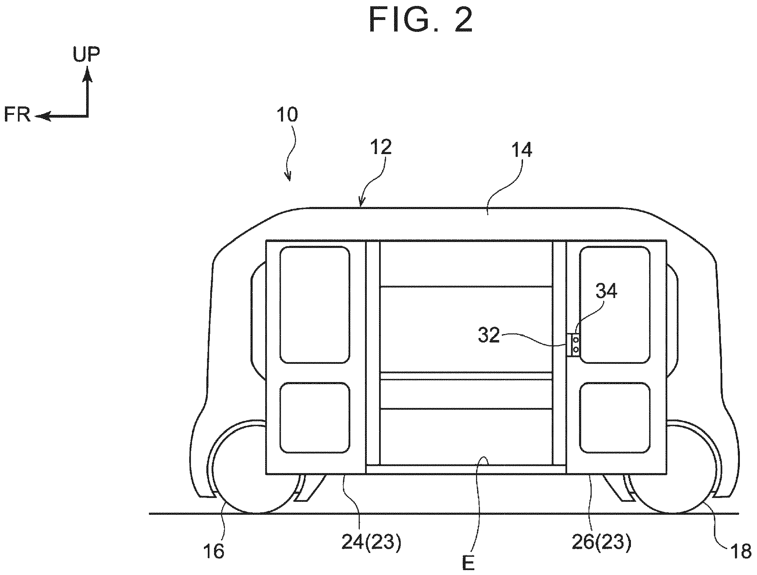

As shown in FIGS. 1 and 2, an open and close door 23 that can open and close the entrance and exit opening E is mounted on the vehicle body 12 so as to cover the entrance and exit opening E. The open and close door 23 includes a front door 24 and a rear door 26 that are mounted adjacent to each other in the longitudinal direction of the vehicle 10 (the width direction of the entrance and exit opening E).

The front door 24 is mounted on the front side of the vehicle 10 and is configured to open the front part of the entrance and exit opening E by moving toward the front of the vehicle. The front door 24 of the present embodiment slides outside the outer panel 14 of the vehicle body 12.

The rear door 26 is mounted on the rear side of the vehicle 10 and is configured to open the rear part of the entrance and exit opening E by moving toward the rear of the vehicle. Like the front door 24, the rear door 26 of the present embodiment slides outside the outer panel 14 of the vehicle body 12. An authentication unit 32, which is an incoming passenger detection unit, and an open and close switch unit 34 are mounted on the outer surface of the rear door 26.

The authentication unit 32 includes sensors for authenticating a passenger P1 getting on the vehicle body 12. The authentication unit 32 is provided on the rear side of the entrance and exit opening E in the longitudinal direction of the vehicle 10 (a first side in the width direction of the entrance and exit opening E) outside a vehicle cabin of the vehicle body 12. In the present embodiment, the open and close door 23 is configured to open when the incoming passenger P1 is authenticated by the authentication unit 32. As used herein, the rear side of the entrance and exit opening E in the longitudinal direction of the vehicle 10 (the first side in the width direction of the entrance and exit opening E) refers to the side rearward of the middle of the opening width of the entrance and exit opening E in the longitudinal direction of the vehicle 10. Accordingly, in the configuration in which the authentication unit 32 is mounted on the outer surface of the rear door 26 as in the present embodiment, the authentication unit 32 is located rearward of the middle of the opening width of the entrance and exit opening E both when the rear door 26 is open and when the rear door 26 is closed.

The authentication unit 32 can be a sensor for biometric authentication such as fingerprint recognition and iris recognition. The authentication unit 32 may be a shoe recognition sensor that recognizes the shoe(s) of the passenger P1, a terminal sensor that detects a mobile terminal, a sensor that reads magnetism, a sensor that reads a two-dimensional code displayed on the screen of a mobile terminal, etc. The authentication unit 32 may be a combination of such sensors. For example, the authentication unit 32 of the present embodiment includes a sensor that recognizes the face of the passenger P1. Information on the faces of users may be stored in advance in a server outside the vehicle 10, and authentication may be performed by comparing the face of the passenger P1 read by the authentication unit 32 with the information stored in the server.

The open and close switch unit 34 is mounted adjacent to the authentication unit 32. As shown in FIG. 2, the open and close switch unit 34 of the present embodiment has two buttons, namely upper and lower buttons. One of the buttons is a button for the operation of opening the open and close door 23, and the other button is a button for the operation of closing the open and close door 23. As described above, the open and close door 23 is configured to open upon authentication by the authentication unit 32. The open and close switch unit 34 is therefore operated to open or close the open and close door 23 at any timing other than upon authentication. For example, the open and close door 23 may be configured to open when the open and close switch unit 34 is operated in an emergency. The open and close door 23 may be configured not to open and close even by the operation of the open and close switch unit 34 when the vehicle 10 is traveling and when the open and close door 23 is not allowed to open and close.

Electric power is supplied to the authentication unit 32 and the open and close switch unit 34 by a wire harness, not shown. For example, a first end of the wire harness is connected to the authentication unit 32 and the open and close switch unit 34 through the inside of the rear door 26. A second end of the wire harness is routed along a roof from the upper part of the rear door 26, extends from the roof toward the lower side of the vehicle 10 through the inside of the rear center pillar 22, and is connected to a power supply unit, not shown.

As shown in FIG. 1, the payment device 28 and the open and close switch unit 30 are provided inside the vehicle cabin of the vehicle body 12. The payment device 28 and the open and close switch unit 30 are located on the front side of the entrance and exit opening E in the longitudinal direction of the vehicle 10 (a second side in the width direction of the entrance and exit opening E) and are attached to the inner surface of the front center pillar 20 in the width direction of the vehicle 10. In the present embodiment, the open and close door 23 is configured to open when the payment of a passenger P2 getting off the vehicle 10 is completed by the payment device 28. As used herein, the front side of the entrance and exit opening E in the longitudinal direction of the vehicle 10 (the second side in the width direction of the entrance and exit opening E) refers to the side forward of the middle of the opening width of the entrance and exit opening E in the longitudinal direction of the vehicle 10.

The payment device 28 is a device that processes a fare payment made by the passenger P2 getting off the vehicle body 12. For example, the payment device 28 may be a device that processes a payment by authenticating a prepaid card, a credit card, etc. The payment device 28 may include a cash dispenser.

The open and close switch unit 30 is mounted adjacent to the payment device 28. The open and close switch unit 30 has two buttons, namely upper and lower buttons. One of the buttons is a button for the operation of opening the open and close door 23, and the other button is a button for the operation of closing the open and close door 23. In the present embodiment, the open and close door 23 is configured to open upon payment with the payment device 28. The open and close switch unit 30 is therefore configured to be operated to open or close the open and close door 23 at any timing other than upon payment.

### Functions

Next, functions of the present embodiment will be described.

In the vehicle 10 of the present embodiment, the authentication unit 32 is provided outside the vehicle cabin of the vehicle body 12 with the entrance and exit opening E, and the payment device 28 is provided inside the vehicle cabin of the vehicle body 12. The authentication unit 32 is provided on the rear side of the entrance and exit opening E in the longitudinal direction of the vehicle 10. The passenger P1 getting on the vehicle 10 therefore gets on the vehicle 10 from the rear side of the entrance and exit opening E in the longitudinal direction of the vehicle 10, and a flow line for the passenger P1 getting on the vehicle 10 is thus naturally formed. That is, even when a plurality of passengers gets on the vehicle 10, they will form a line toward the authentication unit 32 or line up from the authentication unit 32 toward the rear of the vehicle 10 along the outer panel 14 of the vehicle body 12.

On the other hand, the passenger P2 getting off the vehicle 10 gets off the vehicle 10 from the front side of the entrance and exit opening E in the longitudinal direction of the vehicle 10, and a flow line for the passenger P2 getting off the vehicle 10 is thus naturally formed so as not to obstruct the passenger P1 getting on the vehicle 10. As a result, in the configuration in which a passenger getting on the vehicle 10 and a passenger getting off the vehicle 10 use the same entrance and exit, the passengers can smoothly get on and off the vehicle 10.

In the vehicle 10 of the present embodiment, the entrance and exit opening E is covered by the open and close door 23 including the plurality of doors (front door 24 and rear door 26) mounted adjacent to each other in the width direction of the entrance and exit opening E. The entrance and exit opening E can thus be opened wider than in a configuration having a single door of the same size. Accordingly, passengers can smoothly get on and off the vehicle 10 even though the same opening is used as both the entrance and the exit.

In the vehicle 10 of the present embodiment, when the entrance and exit opening E is opened, the front door 24 moves toward the front of the vehicle 10 and the rear door 26 moves toward the rear of the vehicle 10. When the entrance and exit opening E is closed, the front door 24 moves toward the rear of the vehicle and the rear door 26 moves toward the front of the vehicle. Accordingly, the entrance and exit opening E can be more quickly opened and closed than in a configuration in which the front door 24 and the rear door 26 move in the same direction. Since the vehicle 10 has the entrance and exit opening E in the middle part of the side of the vehicle body 12 in the longitudinal direction of the vehicle 10, the entrance and exit opening E can be made sufficiently wide without affecting arrangement of units etc. of a drive system in the front and rear parts of the vehicle body 12.

In the vehicle 10 of the present embodiment, the authentication unit 32 is mounted on the outer surface of the rear door 26, and the authentication unit 32 authenticates the passenger P1 as he or she gets on the vehicle 10. Accordingly, the authentication unit 32 can detect the passenger P1 getting on the vehicle 10 even when the rear door 26 is open.

Since the payment device 28 is used as the outgoing passenger detection unit, the flow line for a passenger getting off the vehicle 10 is secured while allowing him or her to pay a fare as he or she gets off the vehicle 10.

### Second Embodiment

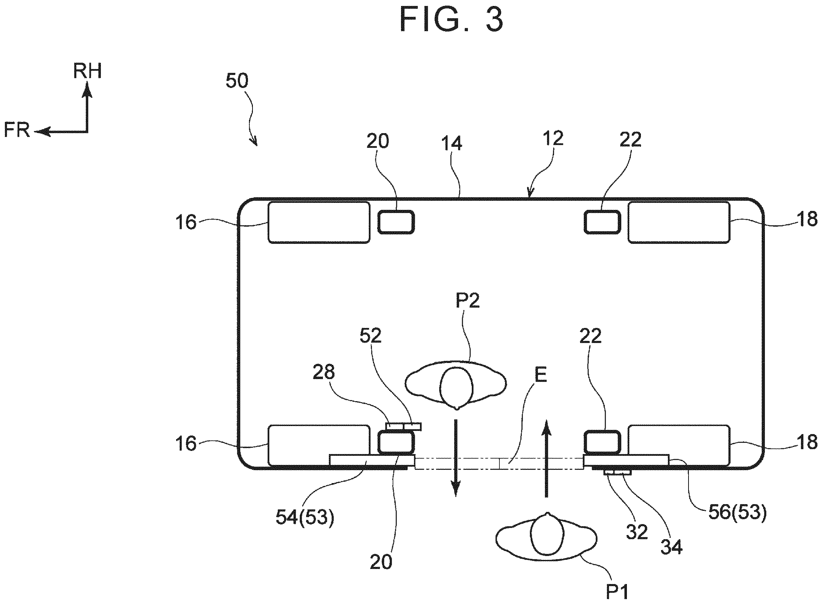

A vehicle 50 according to a second embodiment will be described with reference to FIG. 3. Configurations similar to those of the first embodiment are denoted by the same signs as those of the first embodiment, and description thereof will be omitted as appropriate.

As shown in FIG. 3, the vehicle 50 of the present embodiment includes the vehicle body 12 capable of accommodating a large number of passengers. The vehicle body 12 includes the outer panel 14 that forms a design surface. An open and close door 53 that can open and close the entrance and exit opening E is mounted on the vehicle body 12 so as to cover the entrance and exit opening E. The open and close door 53 includes a front door 54 and a rear door 56 that are mounted adjacent to each other in the longitudinal direction of the vehicle 50 (the width direction of the entrance and exit opening E).

The front door 54 is mounted on the front side of the vehicle 50 and is configured to open the front part of the entrance and exit opening E by moving toward the front of the vehicle. The front door 54 of the present embodiment is different from the first embodiment in that the front door 54 slides inside the outer panel 14 in the width direction of the vehicle 50.

The rear door 56 is mounted on the rear side of the vehicle 50 and is configured to open the rear part of the entrance and exit opening E by moving toward the rear of the vehicle. Like the front door 54, the rear door 56 of the present embodiment slides inside the outer panel 14 in the width direction of the vehicle 50. Accordingly, when the open and close door 53 is open, each of the front door 54 and the rear door 56 partially or completely hides inside the outer panel 14.

The payment device 28 and an outgoing passenger guidance display unit 52 are provided inside the vehicle cabin of the vehicle body 12. The payment device 28 and the outgoing passenger guidance display unit 52 are located on the front side of the entrance and exit opening E in the longitudinal direction of the vehicle 50 (the second side in the width direction of the entrance and exit opening E) and are attached to the inner surface of the front center pillar 20 in the width direction of the vehicle 50. The open and close door 53 is configured to open when the payment of the passenger P2 getting off the vehicle 50 is completed by the payment device 28.

The outgoing passenger guidance display unit 52 is a display unit for guiding a passenger who is inside the vehicle cabin and is going to get off the vehicle 50 toward the front side of the entrance and exit opening E in the longitudinal direction of the vehicle 50. For example, the outgoing passenger guidance display unit 52 includes a display that displays the exit position and the position of the payment device 28. How to use the payment device 28 etc. is displayed on the outgoing passenger guidance display unit 52.

The authentication unit 32 and the open and close switch unit 34 are mounted on the outer panel 14. Specifically, the authentication unit 32 and the open and close switch unit 34 are attached to a part of the outer panel 14 located on the rear side of the entrance and exit opening E in the longitudinal direction of the vehicle 50 (the first side in the width direction of the entrance and exit opening E). In the present embodiment, the authentication unit 32 and the open and close switch unit 34 are thus configured so that their positions do not change even when the rear door 56 is opened or closed.

### Functions

Next, functions of the present embodiment will be described.

In the vehicle 50 of the present embodiment, the outgoing passenger guidance display unit 52 can guide the passenger P2 who is going to get off the vehicle 50 to the exit position. A flow line for the passenger P2 getting off the vehicle 50 is naturally formed, and the passenger P2 is less likely to come into contact with the passenger P1 when the passenger P2 gets off the vehicle 50.

In the present embodiment, the outgoing passenger guidance display unit 52 displays the position of the payment device 28, how to use the payment device 28, etc. Accordingly, even a passenger who does not know how to pay can smoothly make a payment.

In the present embodiment, the authentication unit 32 and the open and close switch unit 34 are mounted on the outer panel 14 of the vehicle body 12. This configuration allows simpler wiring than in a configuration in which the authentication unit 32 and the open and close switch unit 34 are mounted on a movable door etc. Moreover, the position of the authentication unit 32 and the position of the open and close switch unit 34 do not change even when the rear door 56 is opened or closed. Other functions are similar to those of the first embodiment.

### Third Embodiment

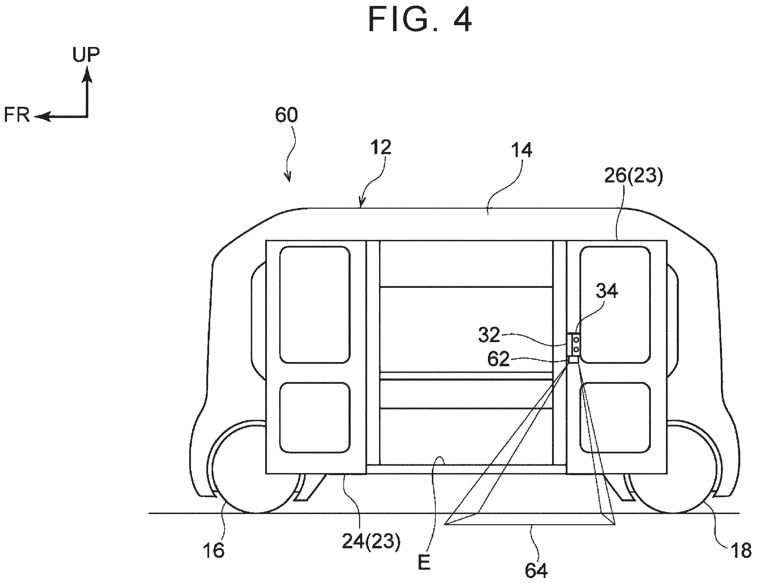

A vehicle 60 according to a third embodiment will be described with reference to FIG. 4. Configurations similar to those of the first embodiment are denoted by the same signs as those of the first embodiment, and description thereof will be omitted as appropriate.

As shown in FIG. 4, the vehicle 60 of the present embodiment is different from the first embodiment in that the vehicle 60 includes an incoming passenger guidance display unit 62.

The incoming passenger guidance display unit 62 is mounted outside the vehicle cabin of the vehicle body 12. Specifically, the incoming passenger guidance display unit 62 is mounted on the outer surface of the rear door 26 near the authentication unit 32 and the open and close switch unit 34.

The incoming passenger guidance display unit 62 includes a projection device that projects an image downward in the vertical direction of the vehicle 60. The projection device projects a predetermined image onto the ground. In the present embodiment, for example, the projection device of the incoming passenger guidance display unit 62 is configured to project an image showing the position for authentication onto the ground.

A display area 64 where the image projected by the projection device is displayed is set on the rear side of the entrance and exit opening E in the longitudinal direction of the vehicle 60. For example, the words "authentication here" are projected onto the display area 64 by the incoming passenger guidance display unit 62. The words "enter here" may be displayed on the display area 64. Symbols such as characters and arrows indicating the direction in which passengers are supposed to line up may be displayed on the assumption that a plurality of passengers gets on the vehicle 60. That is, the incoming passenger guidance display unit 62 displays information for guiding a passenger who is outside the vehicle cabin and is going to get on the vehicle 60 toward the rear side of the entrance and exit opening E in the longitudinal direction of the vehicle 60.

### Functions

Next, functions of the present embodiment will be described.

In the vehicle 60 of the present embodiment, the incoming passenger guidance display unit 62 can guide the passenger P1 who is going to get on the vehicle 60 to the position of the authentication unit 32, namely the entrance position. Especially, projecting and displaying the position for authentication on the ground as in the present embodiment causes a passenger who is going to get on the vehicle 60 to naturally look at the display area 64, so that the passenger can smoothly get authenticated and get on the vehicle 60. Other functions are similar to the first embodiment.

### Fourth Embodiment

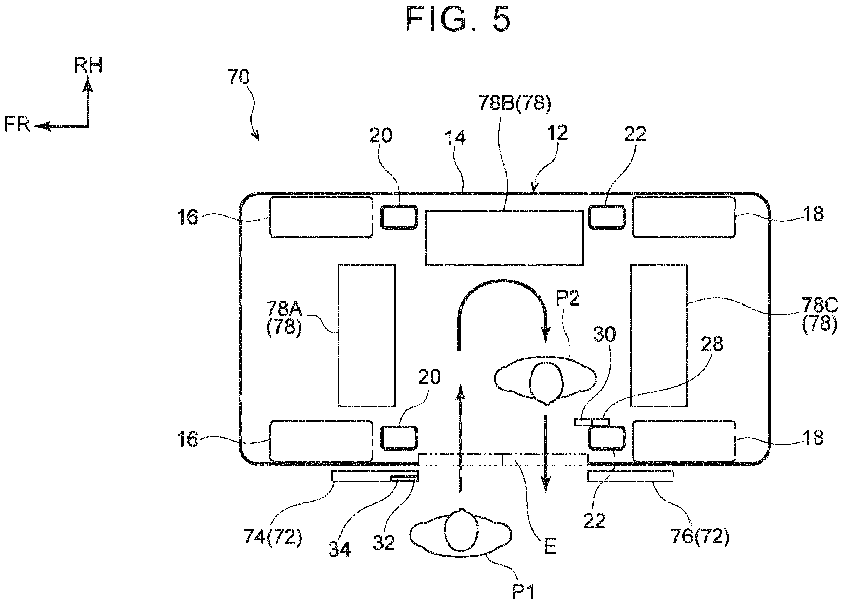

A vehicle 70 according to a fourth embodiment will be described with reference to FIG. 5. Configurations similar to those of the first embodiment are denoted by the same signs, and description thereof will be omitted as appropriate.

As shown in FIG. 5, the vehicle 70 of the present embodiment is different from the first embodiment in that the vehicle 70 is a vehicle used as a mobile shop in which a plurality of product shelves 78 is arranged in a vehicle cabin.

A product shelf 78A, a product shelf 78B, and a product shelf 78C are arranged in the vehicle cabin of the vehicle 70. The product shelf 78A is placed on the front side of the vehicle 70 so that the longitudinal direction of the product shelf 78A is the width direction of the vehicle 70. Products on the product shelf 78A can therefore be taken from the rear side of the product shelf 78A in the longitudinal direction of the vehicle 70. The product shelf 78B is placed at a position rearward of the product shelf 78A in the longitudinal direction of the vehicle 70 and rightward of the product shelf 78A in the width direction of the vehicle 70 so that the longitudinal direction of the product shelf 78B is the longitudinal direction of the vehicle 70. Products on the product shelf 78B can therefore be taken from the left side of the product shelf 78B in the width direction of the vehicle 70. The product shelf 78C is placed at a position rearward of the product shelf 78B in the longitudinal direction of the vehicle 70 so as to face the product shelf 78A. Products on the product shelf 78C can therefore be taken from the front side of the product shelf 78C in the longitudinal direction of the vehicle 70. A passenger having entered the vehicle cabin can look at the products while moving inside the vehicle cabin in the order of the product shelf 78A, the product shelf 78B, and the product shelf 78C.

An open and close door 72 that can open and close the entrance and exit opening E is mounted on the vehicle body 12 so as to cover the entrance and exit opening E. The open and close door 72 includes a front door 74 and a rear door 76 that are mounted adjacent to each other in the longitudinal direction of the vehicle 70 (the width direction of the entrance and exit opening E).

The front door 74 is mounted on the front side of the vehicle 70 and is configured to open the front part of the entrance and exit opening E by moving toward the front of the vehicle. The front door 74 of the present embodiment slides outside the outer panel 14 of the vehicle body 12. The authentication unit 32 and the open and close switch unit 34 are mounted on the outer surface of the front door 74.

The rear door 76 is mounted on the rear side of the vehicle 70 and is configured to open the rear part of the entrance and exit opening E by moving toward the rear of the vehicle. The rear door 76 of the present embodiment slides outside the outer panel 14 of the vehicle body 12.

The payment device 28 and the open and close switch unit 30 are provided inside the vehicle cabin of the vehicle body 12. The payment device 28 and the open and close switch unit 30 are located on the rear side of the entrance and exit opening E in the longitudinal direction of the vehicle 70 and are attached to the inner surface of the rear center pillar 22 in the width direction of the vehicle 70.

### Functions

Next, functions of the present embodiment will be described.

In the vehicle 70 of the present embodiment, the authentication unit 32 is provided on the front side of the entrance and exit opening E in the longitudinal direction of the vehicle 70. The passenger P1 getting on the vehicle 70 therefore gets on the vehicle 70 from the front side of the entrance and exit opening E in the longitudinal direction of the vehicle 70, and a flow line for the passenger P1 getting on the vehicle 70 is thus naturally formed.

On the other hand, the passenger P2 getting off the vehicle 70 gets off the vehicle 70 from the rear side of the entrance and exit opening E in the longitudinal direction of the vehicle 70, and a flow line for the passenger P2 getting off the vehicle 70 is thus naturally formed so as not to obstruct the passenger P1 getting on the vehicle 70. As a result, in the configuration in which a passenger getting on the vehicle 70 and a passenger getting off the vehicle 70 use the same entrance and exit, the passengers can smoothly get on and off the vehicle 70.

In the present embodiment, after the passenger P1 gets on the vehicle 70, the passenger P1 moves to the right in the width direction of the vehicle 70 while looking at the product shelf 78A closest to the authentication unit 32. The passenger P1 is thus guided to the product shelf 78B. The passenger P1 then moves toward the rear of the vehicle 70 along the product shelf 78B. The passenger P1 is thus guided to the product shelf 78C. The passenger P1 then moves to the left in the width direction of the vehicle 70 along the product shelf 78C. Since the payment device 28 is located near the left end of the product shelf 78C in the width direction of the vehicle 70, the passenger P1 can pay for his or her purchase without having to look for the payment device 28. That is, a one-way flow line from getting on the vehicle 70 until making a payment can be naturally formed, which reduces interference between passengers inside the vehicle cabin.

Although the vehicles 10, 50, 60, and 70 according to the first to fourth embodiments are described above, it should be understood that the vehicle according to the invention can be implemented in various forms without departing from the spirit and scope of the invention. For example, in the above embodiments, the vehicle has the entrance and exit opening E in the middle part of the side of the vehicle body 12 in the longitudinal direction of the vehicle. However, the invention is not limited to this, and the vehicle may have an entrance and exit opening in the rear part of the vehicle body 12. Alternatively, the vehicle may have two entrance and exit openings, one in the side of the vehicle body 12 and one in the rear part of the vehicle body 12.

The configuration in which the authentication unit 32 is used as the incoming passenger detection unit is described in the above embodiments. However, the invention is not limited to this, and other incoming passenger detection unit may be used. For example, an infrared motion sensor may be used as the incoming passenger detection unit, or an open and close button may be used as the incoming passenger detection unit. In the embodiment shown in FIG. 1, when the open and close button is used instead of the authentication unit 32 as the incoming passenger detection unit, the open and close switch unit 34 is not necessary. The passenger P1 getting on the vehicle 10 is detected when the passenger P1 presses the open and close button.

The configuration in which the payment device 28 for processing a fare payment made by a passenger is used as the outgoing passenger detection unit is described in the above embodiments. However, the invention is not limited to this, and other outgoing passenger detection unit may be used. For example, an outgoing passenger authentication unit for authenticating a passenger using sensors similar to those of the authentication unit 32 may be used as the outgoing passenger detection unit. In this case, the section traveled is from the entrance position authenticated by the authentication unit 32 to the exit position authenticated by the outgoing passenger authentication unit, and a fare can be calculated from the section traveled.

In the above embodiments, the open and close door 23, 53, 72 is composed of the front door 24, 54, 74 and the rear door 26, 56, 76. However, the invention is not limited to this. For example, the open and close door may be composed of a single sliding door. Alternatively, the open and close door may be composed of three or more doors mounted adjacent to each other in the width direction of the entrance and exit opening E. Gliding doors, shutter doors, etc. may be used instead of the sliding doors.

In the above embodiments, the open and close door 23 is configured to open when at least one of the authentication unit 32 and the payment device 28 detects a passenger. However, the invention is not limited to this. For example, in the embodiment shown in FIG. 1, only the rear door 26 may open when the authentication unit 32 authenticates the passenger P1. In this configuration, the front door 24 will not open when there is no passenger getting off the vehicle. This reduces reduction in temperature inside the vehicle cabin due to outside air.

## Claims

1. A vehicle (10; 50; 60; 70), comprising:
a vehicle body (12) including an entrance and exit opening (E) that allows communication between inside and outside of a vehicle cabin;
an incoming passenger detection unit (32) mounted on a first side in a width direction of the entrance and exit opening (E) outside the vehicle cabin of the vehicle body (12); and
an outgoing passenger detection unit (28) mounted on a second side in the width direction of the entrance and exit opening (E) inside the vehicle cabin of the vehicle body (12).

2. The vehicle (10; 50; 60; 70) according to claim 1, wherein the entrance and exit opening (E) is configured to be opened and closed by an open and close door (23; 53; 72), the open and close door (23; 53; 72) including a plurality of doors mounted adjacent to each other in the width direction of the entrance and exit opening (E).

3. The vehicle (10; 50; 60; 70) according to claim 2, wherein:
the vehicle (10; 50; 60; 70) has the entrance and exit opening (E) in a middle part of a side of the vehicle body (12) in a longitudinal direction of the vehicle (10; 50; 60; 70); and
the open and close door (23; 53; 72) includes a front door (24; 54; 74) and a rear door (26; 56; 76), the front door (24; 54; 74) being configured to open a front part of the entrance and exit opening (E) by moving toward a front of the vehicle (10; 50; 60; 70), and the rear door (26; 56; 76) being configured to open a rear part of the entrance and exit opening (E) by moving toward a rear of the vehicle (10; 50; 60; 70).

4. The vehicle (10; 50; 60; 70) according to claim 3, wherein the front door (24; 54; 74) and the rear door (26; 56; 76) are configured to slide outside an outer panel (14) of the vehicle body (12), and the incoming passenger detection unit (32) is mounted on an outer surface of the front door (24; 74) or an outer surface of the rear door (26; 76).

5. The vehicle (10; 50; 60; 70) according to any one of claims 1 to 4, wherein the incoming passenger detection unit (32) includes an authentication unit configured to authenticate a passenger (P1) getting on the vehicle body (12).

6. The vehicle (10; 50; 60; 70) according to any one of claims 1 to 5, wherein the outgoing passenger detection unit (28) includes a payment device configured to process a fare payment made by a passenger (P2) getting off the vehicle body (12).

7. The vehicle (50; 60) according to any one of claims 1 to 6, wherein:
an incoming passenger guidance display unit (62) is mounted outside the vehicle cabin of the vehicle body (12), the incoming passenger guidance display unit (62) being configured to guide a passenger who is outside the vehicle cabin and is going to get on the vehicle body (12) to the first side in the width direction of the entrance and exit opening (E); and
an outgoing passenger guidance display unit (52) is mounted inside the vehicle cabin of the vehicle body (12), the outgoing passenger guidance display unit (52) being configured to guide a passenger who is inside the vehicle cabin and is going to get off the vehicle body (12) to the second side in the width direction of the entrance and exit opening (E).

8. The vehicle (10; 50; 60; 70) according to any one of claims 1 to 7, wherein the vehicle (10; 50; 60; 70) is configured to automatically stop at predetermined stop positions to pick up and drop off a passenger and to autonomously travel between the stop positions.

9. The vehicle (10; 50; 60; 70) according to claim 7, wherein the incoming passenger guidance display unit (62) includes a projection device configured to project a predetermined image toward a lower side of the vehicle.

10. The vehicle (50) according to any one of claims 1 to 3, wherein the incoming passenger detection unit (32) is mounted on an outer panel (14) of the vehicle body (12).
